# Europäisches Patentamt
# European Patent Office
# Office européen des brevets

(11) Publication number: **0 020 352**
**B1**

(12) **EUROPEAN PATENT SPECIFICATION**

(45) Date of publication of patent specification: **19.03.86**

(21) Application number: **79900860.2**

(22) Date of filing: **18.04.79**

(86) International application number:
**PCT/US79/00250**

(87) International publication number:
**WO 80/00625 03.04.80 Gazette 80/07**

(51) Int. Cl.⁴: **F 16 K 17/10,** G 05 D 16/00,
**F 16 K 31/122**

(54) **PILOT OPERATED RELIEF VALVE.**

(30) Priority: **18.09.78 US 943377**

(43) Date of publication of application:
**07.01.81 Bulletin 81/01**

(45) Publication of the grant of the patent:
**19.03.86 Bulletin 86/12**

(84) Designated Contracting States:
**FR**

(56) References cited:
**US-A-2 998 020**
**US-A-3 211 174**
**US-A-3 294 111**
**US-A-3 414 008**
**US-A-3 595 263**
**US-A-3 664 362**
**US-A-3 726 301**
**US-A-3 754 566**
**US-A-4 114 637**

(73) Proprietor: **VAPOR CORPORATION**
**6420 W. Howard Street**
**Chicago, IL 60648 (US)**

(72) Inventor: **REIP, Raymond G.**
**10 Oxford**
**Clarendon Hills, IL 60514 (US)**

(74) Representative: **Muir, Ian R. et al**
**HASELTINE LAKE & CO. Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates generally to pressure-sensitive relief valves and, more particularly, concerns a novel two-stage pilot valve providing pressure relief operation of a main relief valve having substantially larger capacity.

A prior art relief and main valve combination is disclosed in U.S. Patent 2,998,020. This pilot valve has a multi-stage arrangement incorporating three plunger or poppet valves and has an inlet port, a control port and an exhaust port in operation, the inlet port being connected to the control port for pressures below a specific excess pressure. For pressures greater than this excess pressure, the operation of a first plunger in a first stage permits fluid pressure to act on a second plunger against a spring and this plunger in turn acts on a third plunger against a further spring to close off a path between the inlet port and the control port and to open up a path between the control port and exhaust port.

This pilot valve has a complicated structure with spring restrained second and third plungers in the stage or stages of the pilot valve subsequent to the first stage which incorporates the first plunger.

The present invention seeks to provide an improved less complicated pilot valve suitable for operation in a pilot and main valve combination.

According to the present invention there is provided a pressure-sensitive pilot valve for operating a main pressure valve to relieve excess product pressure, having a first stage and a second stage in cascade and comprising: a valve body containing said stages and having an inlet port, a control port and an exhaust port; a first stage poppet having first and second positions and coacting with a first seat for the first position below a predetermined product inlet pressure; a second seat and a third seat in the body; a second stage plunger arrangement having a pressure surface and having portions coacting with the second and third seats to prevent flow through these seats for second and first plunger arrangement positions respectively; a product communicating path in said body between said first seat and first inlet port; and a product communicating path in said body, through said second seat, between the inlet port and the control port, characterized in that the plunger arrangement is a unitary plunger, there is a product communicating path in said body through said first seat to the plunger pressure surface for the poppet second position; said plunger has a second pressure surface of smaller area than said pressure surface; there is a product communicating path in said body from said first inlet port to the plunger second pressure surface; and there is a product communicating path between said control port, third seat and exhaust port for the plunger second position; such that product pressure at the first inlet port when below said predetermined inlet pressure acts on said plunger second pressure surface to hold the plunger in said first plunger position and when in excess of said predetermined product inlet pressure causes said poppet to move from said poppet first to second position whereby the inlet port pressure acts on said second stage plunger pressure surface and the plunger moves to said plunger second position, coacting with said second seat and isolating said inlet port from the control port.

The pressure-sensitive pilot relief valve disclosed here employs mechanically independent first and second pressure operated stages. In a preferred operational embodiment situation, the two-stage pilot valve operates a substantially larger main valve by venting the main valve head volume. The design of the main valve is such that prior to the relief valve venting, the main valve closure member is in pressure equilibrium with the tank or pressure vessel. However, when the head volume is vented to atmosphere, the tank pressure is utilized to open the main valve providing the desired pressure relief. An additional pressure signal to the pilot valve is provided by a down-stream venturi or ram tube which provides an indication of true tank pressure allowing the pilot and main valve to reset at a correct tank pressure independent of the magnitude of main valve flow.

A feature of the two-stage pilot valve disclosed utilizes a specific storage volume to control the rate of change of actuating product flow, to be vented by the main valve, between the first and second stages. These controlled rates of operation provide positive and more accurate relief and blowdown operations of both the pilot and main valve.

An additional embodiment of the invention involves the use of a unique ball selector which allows testing of the pilot valve stages from an independent and/or calibrated pressure source automatically admits test pressures higher than the storage tank pressure, thereby confining test pressure to the pilot valve alone. On subsequent reduction of the test pressure pilot action is such that the test connection is automatically closed off allowing testing equipment to be disconnected without loss of tank or product pressure.

For a better understanding of the present invention, reference will now be made, by way of example, to the accompanying drawings in which:

Figure 1 is a sectional view of a pilot valve according to the invention showing the first and second stages, ball selector, and associated porting,

Figure 2 is a sectional view of a main valve, for use with a pilot in accordance with the invention, including tank, conduit, or pressure vessel inlets, and showing a pilot tube, port and pilot valve connecting tube, and

Figure 3 is a semi-pictorial view of the pilot valve of Fig. 1 in a preferred but not exclusive operational embodiment, wherein the pilot valve is mounted closely adjacent to the main valve of Fig. 2. Also shown is the pilot tap, connecting tube and its associated pressure tap just above the main valve inlet port.

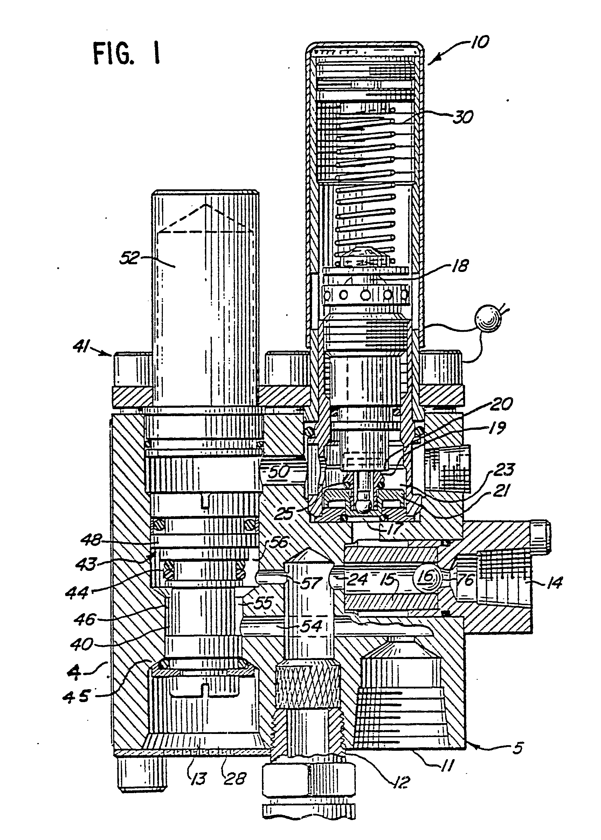

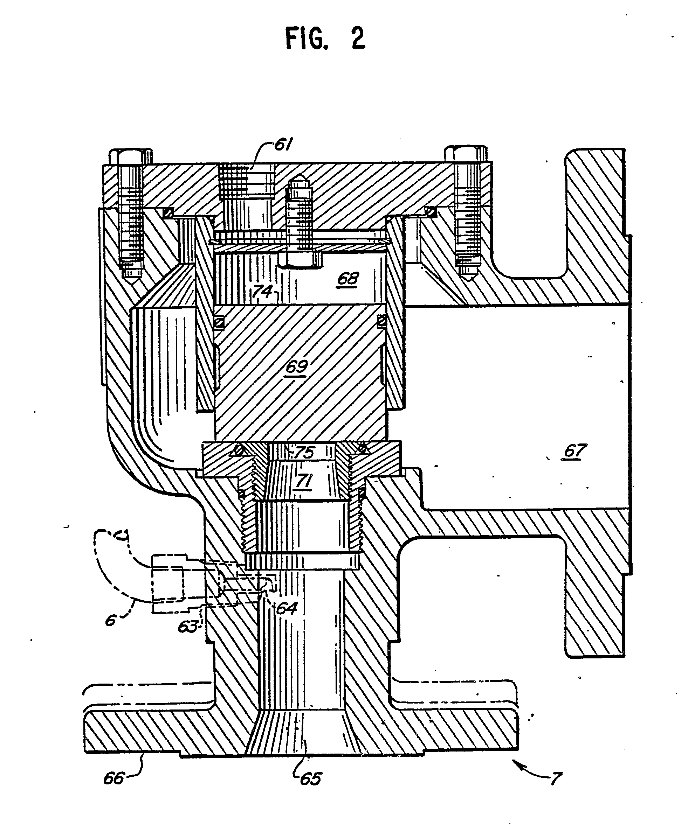

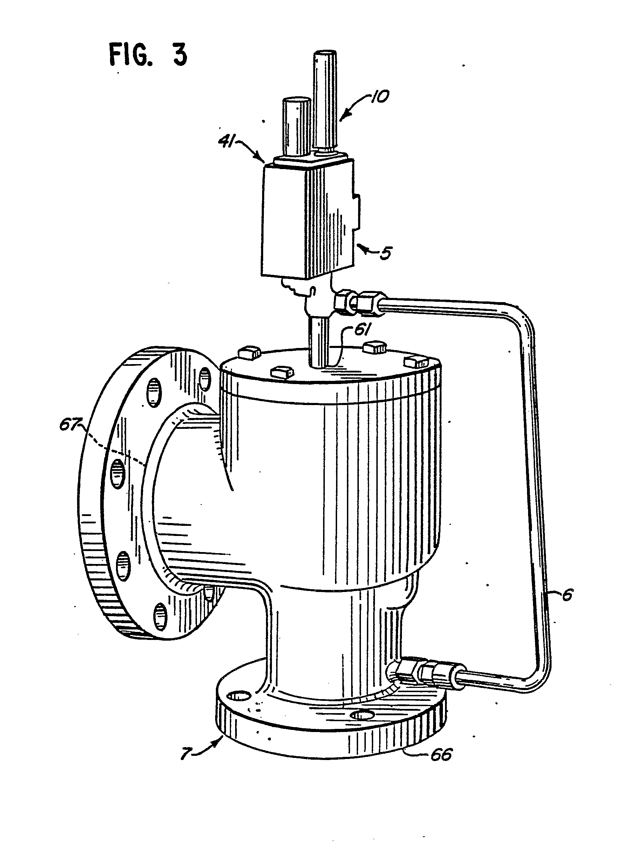

In reference to Figures 1 and 2, the pressure operated relief valve disclosed here consists of a pilot valve generally shown as 5 (ref. Figure 1), having a first stage 10 and a second stage generally shown as 41 contained in a body 4. In a preferred operational embodiment, the pilot is mounted closely adjacent to the upper end of a main valve 7 communicating with the pilot through main valve port 61 and control port 11 of the pilot valve. In the disclosed operational embodiment, a pipe or conduit connects main valve port 61 and control port 11 (ref. Fig. 3). Additionally, there is an inner-connecting external pressure tube 6 further communicating with a pressure tap 63 contained in the lower portion of the main valve 7 just above the main valve inlet flange 66 and inlet port 65. The pressure tap 63 communicates with a total pressure pitot ram tube 64, providing a tank pressure signal during main valve flow. Typically, the lower flange 66 of the main valve is mounted on an opening or communicates with a pressure vessel, or conduit. Operation of the pressure operated relief valve, therefore, vents the product contained in the above-mentioned pressure vessel or conduit.

In operation, assuming that tank pressure is below the relief setting or value, as shown in Figures 1 and 2, static pressure from the associated vessel or conduit is applied to the main valve piston through the port 65 and the pilot valve through port 12 and tube 6, as discussed above. Pressure is, therefore, communicated internal to the pilot valve to the first and second stage elements via ports 57 and 24. Therefore, the first stage poppet 18 experiences pressure over the area defined by the first stage inlet seat, or port 17.

The design of the second stage poppet or plunger assembly 43 and differential areas associated with the second stage closure member or plunger 48 maintain the second stage poppet assembly 43 as shown in its non-venting position sealing against seat 45. Under these conditions, since tank pressure acts on the lower surface 75 of the main valve piston 69, and on the upper surface 74 (via path 12, 57, 55, 54 and 11), and since the main valve effective area 74 is greater than the main valve effective area 75, the main valve closure member also remains in the seated or closed position and no venting of the tank occurs.

Tank pressure is sensed through the main valve inlet 65, and the pressure setting of the pilot valve first stage is determined by the force pre-load of compression spring 30 contained in the pilot valve first stage. When tank pressure increases beyond the calibrated setting, force exerted on the first stage through first stage inlet port 17, raises the poppet 18, thereby opening the first stage inlet 17 and allowing flow through the first and second stage interconnecting port 50. The design of the second stage poppet assembly 43 is such that the second stage poppet or closure member 48 is forced to a position where the second stage seals 44 move vertically in the bore 40 until they seal against the bore seat region 46.

At this time, the main valve head volume 68 vents to the atmosphere through passage 54 and screened vent 13. Also cavities 56 and 55 are closed off by downward movement of the plunger and the sealing action of the seals 44, thereby eliminating communication between the tank and main valve head volume 68 through passage 57. Since at this time the pressure above the main valve closure member 69 and area 74 is substantially less than that exerted on the lower area 75, the closure member or shut-off piston 69 rises allowing the tank product to vent via flow passages 65, 71 and vent to the atmosphere through orifice 67 (ref. Fig. 2).

It should be noted that the first stage poppet assembly 18 utilizes a reaction lip 21 and blowdown pressure sensing elements 19 on the first stage poppet assembly 18. The purpose of the reaction lip is to conserve momentum of the product venting through orifice 17 by redirecting it against the base of the first stage poppet seat. This construction provides a regenerative action wherein the exposed poppet area increases as the poppet lifts off, providing the first stage poppet with a more consistent lift or movement.

After operation of the first and second poppet, total pressure of the vented tank or conduit is now supplied to the ram or pitot tube 64, located in the relief inlet at 63, and communicates this pressure through the tube 6 and port 12, thereby maintaining the second stage poppet assembly 43 in its depressed or relief position.

It should be noted that during the period of main valve head venting, the second stage closure member 48 "shuts-off" after a very small amount of transient product flow, therefore the only flow of product through the first pressure-sensing stage 10 is the amount required to operate the second stage 41, and to pressurize the volume above the second stage, including the volume 52 and other volumes inherently associated with the construction of the first and second stage combinations. The small volume flow allows the use of a very fine filter 15 thereby greatly reducing the amount of contaminated particles or materials entering the pilot valve. This low flow characteristic is, therefore, a substantial advantage and provides increased overall valve reliability and adherence to preset pressure settings.

When the product flow through the main valve 7 causes a reduction in pressure sensed by the ram tube 64 to a point where the set point spring 30 exerts sufficient force to being downward movement of the first stage poppet 18, the seal 25 associated with the first stage poppet moves away from the first stage poppet blowdown seat 20 allowing a controlled amount of leakage from the first stage poppet chamber 23 through a clearance passage between the poppet 18 and seat 20. This action essentially "slows down" the downward descent of the first stage poppet, since the leakage in effect reduces the pressure differential occurring across the poppet and the orifice 17. It should be noted that without this essential feature, rapid motion of the poppet would result in transient closing of the orifice 17, and consequential transient reclosing of the second stage poppet, resulting in further and destructive transient operation or "chattering" of the main valve member 69.

The controlled descent of the first stage poppet is enhanced by the presence of a damping chamber 52 which supplies the working product or fluid to insure that the poppet leakage is of consistent and predictable nature.

It should be noted that the above predictable and controlled first stage poppet also occurs on lift-off, when the damping chamber 52 which essentially bleeds off product flow through the orifice 17 by filling the chamber 52, again preventing "chattering" or mechanical transients with ensuing operation of the second stage and main valve.

Therefore, the pilot valve disclosed herein provides controlled operation during the transient phase through control of transient pressure in the first and second poppet associated volumes. These pressures are significant in providing stable poppet operation. If the pressures decay too rapidly on blowdown or rise too rapidly on lift-off, valve operation will exhibit unwanted and damaging oscillation or chatter. However, as disclosed, the proper combination of differential poppet areas, and associated volumes, the pressure reduction at a reduced rate is achieved resulting in positive and controlled downward movement of the first stage poppet and associated resetting of the second stage.

An additional feature of the pilot valve disclosed is incorporation of a ball selector 16 located between the inlet port 12, the cross port 24, and the field test port 14. The ball selector is entirely surrounded by the first stage filter 15, resulting in, as indicated above, greatly reduced contamination of the entire pilot assembly.

Field testing is accomplished by supplying air, or other convenient medium, at a known pressure, to test point 14. Action of the ball 16 in the inlet orifice 76 closes the pilot test connection until the applied test pressure reaches a value higher than the tank pressure provided through port 12 and tube 6. This is done by the ball 16 moving to close port 24, thereby isolating the product contained in the tank. On reduction of the test pressure, ball 16 moves to again close port 76, thereby preventing inadvertent escape of product volume on removal of the test device from port 14.

Use of this "selector ball" confines test pressure to the first stage thereby requiring a small volume of test gas, i.e. only the amount required to fill volume 52 and other volumes inherently associated with the construction of first and second stages 10 and 41.

As indicated above, operation of the second stage can be obtained through use of a solid disk in place of the screen 28, thereby sealing off the second stage vent 13. With the disk in place, application of test pressure to port 14, as discussed immediately above, isolates that tank from the entire pilot and continuing flow of test fluid, or product, supplied through 14 provides operation of the first stage 10 and the second stage 41 without operation of the large main valve 7. It will be appreciated that this allows complete testing of the pilot without loss of product through the main valve.

**Claims**

1. A pressure-sensitive pilot valve (5) for operating a main pressure valve (7) to relieve excess product pressure, having a first stage (10) and a second stage (41) in cascade and comprising: a valve body (4) containing said stages and having an inlet port (12), a control port (11) and an exhaust port (13); a first stage poppet (18) having first and second positions and coacting with a first seat (17) for a first position below a predetermined product inlet pressure; a second seat (46) and a third seat (45) in the body (4); a second stage plunger arrangement (43) having a pressure surface and having portions coacting with the second and third seats (46, 45) to prevent flow through these seats for second and first plunger arrangement positions respectively; a product communicating path (24, 15) in said body (4) between said first seat (17) and first inlet port (12); and a product communicating path in said body, through said second seat (46), between the inlet port (12) and the control port (11), characterized in that the plunger arrangement is a unitary plunger (43), there is a product communicating path (50) in said body (4) through said first seat (17) to the plunger pressure surface for the poppet (18) second position; said plunger has a second pressure surface of smaller area than said pressure surface; there is a product communicating path (57) in said body (4) from said first inlet port (12) to the plunger second pressure surface; and there is a product communicating path (54) between said control port (11), third seat (45) and exhaust port (13) for the plunger (43) second position; such that product pressure at the first inlet port (12) when below said predetermined inlet pressure acts on said plunger second pressure surface to hold the plunger (43) in said first plunger position and when in excess of said predetermined product inlet pressure causes said poppet (18) to move from said poppet first to second position whereby the inlet port pressure acts on said second stage plunger pressure surface and the plunger (43) moves to said plunger second position, coacting with said second seat (46) and isolating said inlet port (12) from the control port (11).

2. The pilot valve of claim 1 further comprising: means (16) selectively communicating said first seat (17) with said first inlet port (12), or a test port (14); wherein fluid admitted to said test port and reaching a pressure greater than said product pressure isolates said first seat (17) from said first inlet port (12).

3. The pilot valve of claim 2, wherein said selective means further includes:

guide means (15) intermediate said first inlet (12) and test port (14); and

a flow sensitive closure member (16) contained in said guide means (15) for reciprocal movement therein.

4. The pilot valve of claim 3 wherein said guide means include a fluid permeable cylinder (15) and said flow sensitive member is a ball (16).

5. The pilot valve of claim 4 further comprising: a predetermined volume (52) communicating with said plunger pressure surface providing control of internal pilot product flow during said poppet (18) and plunger (43) movements.

6. A pilot valve according to any of claims 2 to 5 including means for blocking said exhaust port (13) during testing to permit testing of the pilot valve (5) without exhausting the contents from the control port (11) through the exhaust port (13).

7. In combination, a pilot valve (5) according to any preceding claim and a main pressure relief valve (7), wherein said main valve has an inlet port (65) for fluid connection to a fluid container, an exhaust port (67) for exhausting fluid to reduce pressure in the container, a piston (69) which in one position blocks a fluid communication path between the main valve inlet port (65) and the exhaust port (67), wherein a fluid communication path (6) is provided between said pilot valve first inlet port (12) and said main valve inlet port (65), a fluid communication path (61) is provided between said control port (11) and a section (68) of the main valve on the side of said piston opposite the inlet port (65) side, and wherein the main valve (7) operates by the pilot second stage plunger (43) moving to its second position to allow a flow of product to the pilot valve exhaust port (13) from the section (68) of said main valve (7) to permit movement of the main valve piston (69) from said one position.

**Patentansprüche**

1. Druckempfindliches Schaltventil (5) für das Betätigen eines Hauptdruckventiles (7) zur Entlüftung überhöhten Produktdrucks mit einem Erstabschnitt (10) und einem Zweitabschnitt (41) in Kaskadenanordnung und mit einem Ventilgehäuse (4), das die genannten Abschnitte umfaßt und eine Einlaßöffnung (12), eine Steueröffnung (11) und eine Auslaßöffnung (13) aufweist; mit einem Erstabschnitt-Kolben (18), der in eine erste und zweite Stellung bringbar ist und der mit einem ersten Sitz (17) in der ersten Stellung unterhalb eines vorbestimmten Produkteinlaßdruckes zusammenwirkt; mit einem zweiten Sitz (46) und einem dritten Sitz (45) in dem Gehäuse (4); mit einer Zweitabschnitt-Kolbenanordnung (43) mit einer Druckfläche und Teilen, die mit dem zweiten und dritten Sitz (46, 45) zusammenwirken, um eine Strömung durch diese Sitze während einer zweiten bzw. ersten Zweitabschnitt-Kolbenanordnungs-Stellung zu verhindern; mit einem zwischen dem genannten ersten Sitz (17) und der ersten Einlaßöffnung (12) verlaufenden Produkt-Verbindungsweg (24, 15) in dem genannten Gehäuse (4), und mit einem über den genannten zweiten Sitz (46) verlaufenden Produkt-Verbindungsweg in dem genannten Gehäuse zwischen der Einlaßöffnung (12) und der Steueröffnung (11), dadurch gekennzeichnet, daß die Zweitabschnitts-Kolbenanordnung als einheitlicher Kolben (43) ausgebildet ist, daß in der zweiten Stellung des Erstabschnitt-Kolbens (18) ein über den genannten ersten Sitz (17) zur Zweitabschnitt-Kolbendruckfläche verlaufender Produkt-Verbindungsweg (50) in dem genannten Gehäuse (4) vorgesehen ist, daß der genannte Zweitabschnitt-Kolben eine zweite Druckfläche aufweist, die kleiner als die genannte Druckfläche ist, daß ein von der genannten ersten Einlaßöffnung (12) zur zweiten Druckfläche des Zweitabschnitt-Kolbens verlaufender Produkt-Verbindungsweg (57) in dem genannten Gehäuse (4) sowie ein Produkt-Verbindungsweg (54) zwischen der genannten Steueröffnung (11), dem dritten Sitz (45) und der Auslaßöffnung (13) in einer zweiten Stellung des Zweitabschnitt-Kolbens (43) vorgesehen sind, so daß der Produktdruck an der ersten Einlaßöffnung (12), wenn er geringer als der vorbestimmte Einlaßdruck ist, auf die genannte zweite Druckfläche des Zweitabschnitt-Kolbens einwirkt, um den Zweitabschnitt-Kolben (43) in der genannten ersten Kolbenstellung zu halten, und daß er bei Überschreiten des genannten vorbestimmten Produkteinlaßdruckes bewirkt, daß der genannte Erstabschnitt-Kolben (18) sich von seiner genannten ersten Kolbenstellung in die zweite Stellung bewegt, wodurch der Einlaß-Öffnungsdruck auf die genannte Zweitabschnitt-Kolbendruckfläche einwirkt und der Zweitabschnitt-Kolben (43) sich in seine genannte zweite Kolbenstellung bewegt, mit dem genannten zweiten Sitz (46) zusammenwirkt und die genannte Einlaßöffnung (12) von der Steueröffnung (11) trennt.

2. Schaltventil nach Anspruch 1 mit einer wahlweise den genannten ersten Sitz (17) mit der genannten ersten Einlaßöffnung (12) oder einer Prüföffnung (14) verbindenden Einrichtung (16), wobei ein der genannten Prüföffnung zugeführtes Fluid, das einen Druck erreicht, der größer als der genannte Produktdruck ist, den genannten ersten Sitz (17) von der genannten ersten Einlaßöffnung (12) trennt.

3. Schaltventil nach Anspruch 2, in welchem die genannte wählende Einrichtung weiterhin eine zwischen dem genannten ersten Einlaß (12) und der Prüföffnung (14) angeordnete Führungseinrichtung (15) und ein in der genannten Führungseinrichtung (15) zur Hin- und Herbewegung in derselben enthaltenes strömungempfindliches Schließglied (16) umfaßt.

4. Schaltventil nach Anspruch 3, in welchem die genannte Führungseinrichtung einen fluiddurchlässigen Zylinder (15) umfaßt und das genannte strömungsempfindliche Glied eine Kugel (16) ist.

5. Schaltventil nach Anspruch 4, welches weiterhin ein vorbestimmtes Volumen (52) umfaßt, das mit der genannten Druckfläche des Zweitabschnitt-Kolbens in Verbindung steht und eine Steuerung der Produktströmung im Inneren des Schaltventils während der Bewegungen des genannten Erstabschnitt-Kolbens (18) und des genannten Zweitabschnitt-Kolbens (43) ermöglicht.

6. Schaltventil nach irgendeinem der Ansprüche 2—5 mit einer Einrichtung zum Sperren der genannten Auslaßöffnung (13) während des Prüfens, um das Prüfen des Schaltventils (5) ohne Entweichen des Inhalts von der Steueröffnung (11) durch die Auslaßöffnung (13) zu ermöglichen.

7. Schaltventil (5) nach irgendeinem vorhergehenden Anspruch und ein Hauptdruck-Entlüftungsventil (7) in Kombination, wobei das genannte Hauptventil eine Einlaßöffnung (65) zur Fluidverbindung mit einem Fluidbehälter, eine Auslaßöffnung (67) zum Ausströmen des Fluids zur Druckverringerung in dem Behälter und einen Hauptventil-Kolben (69) aufweist, der in einer Stellung einen Fluidverbindungsweg zwischen der Hauptventil-Einlaßöffnung (65) und der Auslaßöffnung (67) sperrt, wobei weiter ein Fluidverbindungsweg (6) zwischen der genannten ersten Einlaßöffnung (12) des Schaltventils und der genannten Hauptventil-Einlaßöffnung (65) sowie ein Fluidverbindungsweg (61) zwischen der genannten Steueröffnung (11) und einem auf der der Seite der Einlaßöffnung (65) gegenüberliegenden Seite des genannten Hauptventil-Kolbens angeordneten Teil (68) des Hauptventils vorgesehen sind, und wobei ferner das Hauptventil (7) dadurch arbeitet, daß der Zweitabschnitt-Kolben (43) des Schaltventils sich in seine zweite Stellung bewegt, so daß das Produkt vom Teil (68) des genannten Hauptventils (7) zur Schaltventil-Auslaßöffnung (13) strömen kann, um eine Bewegung des Hauptventil-Kolbens (69) aus der genannten einen Stellung heraus zu ermöglichen.

**Revendications**

1. Soupape pilote (5) sensible à la pression pour actionner une soupape principale (7) soumise à une pression afin d'abaisser une pression excessive d'un produit, ayant un premier étage (10) et un second étage (41) en cascade et comprenant: un corps de soupape (4) contenant lesdits étages et ayant un orifice d'admission (12), un orifice de commande (11) et un orifice d'échappement (13); une soupape soulevante de premier étage (18) ayant une première position et une seconde et coopérant avec un premier siège (17) pour la première position au-dessous d'une pression d'admission prédéterminée d'un produit; un deuxième siège (46) et un troisième siège (45) dans le corps (4); un didpositif à plongeur (43) de second étage ayant une surface de pression et ayant des parties en coopération avec le deuxième et le troisième sièges (46, 45) pour empêcher l'écoulement à travers ces sièges pour la seconde position et la première respectivement du dispositif à plongeur; un passage de communication (24, 15) pour le produit dans ledit corps (4) entre ledit premier siège (17) et ledit premier orifice d'admission (12) et un passage de communication pour le produit dans ledit corps à travers ledit deuxième siège (46) entre l'orifice d'admission (12) et l'orifice de commande (11), caractérisé en ce que la disposition à plongeur est un plongeur unitaire (43), il y a un passage de communication (50) pour le produit dans ledit corps (4) à travers le dit premier siège (17) vers la surface de pression du plongeur pour la soupape (18) en seconde position; ledit plongeur d'une seconde surface de pression d'aire moindre que ladite surface de pression; il y a un passage de communication (57) pour le produit dans ledit corps (4) dudit premier orifice d'admission (12) à la seconde surface de pression de plongeur et il y a un passage de communication (54) pour le produit entre ledit orifice de commande 11, le troisième siège (45) et l'orifice d'échappement (13) pour la seconde position du plongeur (43), de telle façon que la pression du produit au premier orifice d'admission (12) quand elle est au-dessous de la dite pression d'admission prédéterminée agit sur ladite seconde surface de pression dudit plongeur pour maintenir le plongeur (43) dans ladite première position de plongeur et que quand elle dépasse ladite. pression déterminée d'admission du produit, elle fait déplacer ladite soupape soulevante (18) de ladite première position à la seconde position de façon que la pression à l'orifice d'admission agisse sur la dite seconde surface de pression de plongeur du second étage et que le plongeur (43) se déplace jusqu'à ladite seconde position en coopérant avec ledit deuxième siège (46) et en isolant ledit orifice d'admission (12) de l'orifice de commande (11).

2. Soupape selon la revendication 1, comprenant de plus: un moyen (16) faisant communiquer de façon sélective ledit premier siège (17) avec ledit premier orifice d'admission (12) ou avec un orifice de contrôle (14), tandis que le fluide admis audit orifice de contrôle et atteignant une pression supérieure à ladite pression de produit isole ledit premier siège (17) dudit premier orifice d'admission (12).

3. Soupape pilote selon la revendication 2, dans laquelle ledit moyen sélectif comprend de plus:
— un moyen de guidage (15) intermédiaire entre ledit premier orifice d'admission (12) et l'orifice de contrôle (14); et
— un organe de fermeture (16) répondant à l'écoulement et contenu dans un moyen de guidage (15) pour y accomplir un déplacement de va-et-vient.

4. Soupape pilote selon la revendication 3, dans laquelle ledit moyen de guidage comprend un cylindre (15) perméable au fluide et ledit organe répondant à l'écoulement est une bille (16).

5. Soupape pilote selon la revendication 4, comprenant de plus: un volume prédéterminé (52) communiquant avec la dite surface de pression de plongeur établissant la commande de l'écoulement du produit de pilote intérieur pendant les dits mouvements de la soupape soulevante (18) et du plongeur (43).

6. Soupape pilote selon l'une quelconque des revendications 2 à 5, comprenant un moyen pour bloquer ledit orifice d'évacuation (13) pendant le contrôle pour permettre le contrôle de la soupape pilote (5) sans décharge du contenu de l'orifice de commande (11) à travers l'orifice d'échappement (13).

7. En combinaison, une soupape pilote (5) selon l'une quelconque des revendications précédentes et une soupape principale de décharge de pression (7), tandis que ladite soupape principale présente un orifice d'admission (65) pour un raccord de fluide à un réservoir de fluide, un orifice d'échappement (67) pour évacuer du fluide afin d'abaisser la pression dans le réservoir, un piston (69) qui dans une position bloque un passage de communication de fluide entre l'orifice d'admission (65) de la soupape principale et l'orifice d'évacuation (67), tandis qu'un passage (6) de communication de fluide est établi entre ledit premier orifice d'admission (12) de ladite soupape pilote et ledit orifice d'admission (65) de la soupape principale, un chemin de communication (61) est établi entre ledit orifice de commande (11) et une partie (68) de la soupape principale (65) et la soupape principale (7) agit par la plongeur (43) de second étage pilote se déplaçant à sa seconde position pour permettre un écoulement du produit jusqu'à l'orifice d'évacuation (13) de la soupape pilote à partir de la zone (68) de ladite soupape principale (7) pour permettre le mouvement du piston (69) de soupape principale à partir de ladite première position.

FIG. 1

# FIG. 2

FIG. 3